# EUROPEAN PATENT SPECIFICATION

(11) **EP 3 309 711 B1**
(45) Date of publication and mention of the grant of the patent: **04.09.2024**
(21) Application number: 17196002.4
(22) Date of filing: 11.10.2017
(51) Int. Cl.: G06V 10/44, G06V 10/56, G06V 20/58

(54) **VEHICLE ALERT APPARATUS AND OPERATING METHOD THEREOF**
FAHRZEUGALARMVORRICHTUNG UND BEDIENUNGSVERFAHREN DAFÜR
APPAREIL D'ALERTE DE VÉHICULE ET SON PROCÉDÉ DE FONCTIONNEMENT

(30) Priority: 11.10.2016 CN 201610887379
(43) Date of publication of application: 18.04.2018
(73) Proprietor: Beijing Xiaomi Mobile Software Co., Ltd., Beijing 100085 (CN)
(72) Inventor: XIE, Yan, Beijing, 100085 (CN); ZHU, Yue Yue, Beijing, 100085 (CN); CHENG, Yue, Beijing, 100085 (CN)
(74) Representative: Hughes, Andrea Michelle

(56) References cited:
- EP-A2- 1 513 103
- EP-A2- 1 837 803
- US-A1- 2007 263 901
- US-A1- 2009 021 581
- US-A1- 2010 102 990
- US-A1- 2011 228 089
- US-A1- 2014 226 349

## Description

### FIELD

The present disclosure relates to vehicle safety technology, and more particularly to a vehicle alert apparatus and method thereof.

### BACKGROUND

With the rising of living standards, vehicles have popularized to millions of households. However, while the vehicles bring convenience to life, they bring some safety problems, such as frequent traffic accidents. Therefore, the vehicles' safety problems have caused a lot of attention.

There may be a number of causes of traffic accidents. For example, when driving at night, not only is the driver tired or unfocused, but also the night vision is not clear. Thus, even if the vehicles coming from opposite direction turn on their high beams, the driver may not notice the coming vehicles, resulting in traffic accidents.

In embodiments of the present disclosure, at least the following problems are found in the relevant techniques:

At present, driving at night is not safe for drivers. Therefore, there is a need for a vehicle alert apparatus and the operating method for alerting drivers to vehicles traveling from the opposite direction, thereby avoiding the traffic accidents and improving driving safety. US 2010/0102990 A1 discloses a light control system that discriminates light sources in the acquired image as either luminous objects or reflective objects, each pixel obtained that constitutes the acquired image being classified into a plurality of groups according to the brightness of each pixel, and generates e the number of pixels of each group that are matched with each group. Then, when the number of pixels corresponding to the brightest group is less than the number of pixels corresponding to the other groups, the existence of the luminous object in the acquired image is determined, and when the number of pixels corresponding to the brighter group is more than the number of pixels corresponding to the other groups, the existence of the reflective object in the acquired image is determined. US 2011/0228089 A1 discloses a method for distinguishing between approaching vehicle lights (VL) and retroreflectors (R) in the dark, which are recorded as light surfaces by an image recording device oriented towards the surroundings of a vehicle. The image recording device records at least one image of the vehicle surroundings. The image is evaluated by an image processing unit. Light surfaces present on the image are analyzed. A decision is then taken as to whether the light surface is a vehicle light (VL) or a retroreflector (R). Light surfaces whose optical interaction with other objects is shown in the image are identified as vehicle lights (VL). US 2014/0226349 A1 discloses an on-vehicle apparatus detects other vehicle lights from an image picked up outside the vehicle. The apparatus acquires an image around the vehicle and extracts light sources from the image. The apparatus calculates a target area probability that is a probability of a light source in a target area being different vehicle light, in accordance with a probability that light-source feature quantities at least including either of a color of light source and a shape of light source coincide with target-area feature quantities, the target area indicating a preset site that is a part of an area indicating each of the light sources. The target-area feature quantities are prepared as feature quantities of vehicle light, being correlated to the position of a target area. The apparatus outputs information that a light source having the target area probability of not less than a preset threshold is different vehicle light. US 2009/0021581 A1 discloses bright spots imaged by a forward-looking monochrome video camera during night-time operation of a host vehicle are detected and classified to determine the presence of leading and on-coming vehicles. A specified region-of-interest in each image frame is globally scanned to adaptively detect the bright spot contours, and search windows bounding the larger bright spot contours are locally sca1med to adaptively detect individual bright spot contours that were fused in the global scan. A sensitive area within the region-of-interest is locally scanned to adaptively detect dim taillights of a leading vehicle, and path prediction of the host vehicle is used for frame-to-frame tracking of detected spots. Detected spots are classified depending on their location and frame-to-frame movement within the region-of-interest and their glare and pairing characteristics. US 2007 /0263901 A1 discloses a real time night time vehicle detection and identification system comprising an illuminant object image segmentation device 1, an illuminant object classifying device 2, a vehicle lighting object identification device 3, a vehicle position determining device 4 and a vehicle tracking device 5. Under various circumstances of road lighting during nighttime, the system can efficiently and accurately demarcate and identify the lamps of incoming and preceding vehicles and accurately provides the driver with auxiliary information needed to analyze the traffic conditions in front of the vehicle during the conditions met on the road at that time.

### SUMMARY

In order to solve the problems in the prior art, the embodiments of the present disclosure provide a vehicle alert apparatus and operating method thereof, as follows:
according to a first aspect of the embodiments of the present disclosure, a vehicle alerting method is provided as claimed in claim 1.

According to a second aspect of the present embodiment, a vehicle alert apparatus is provided as claimed in claim 5.

According to a third aspect of the present embodiment, a vehicle alert apparatus is provided as claimed in claim 10.

Understandably, the foregoing general description and the following detailed description are only exemplary and explanatory, and do not limit the scope of the present disclosure.

### BRIEF DESCRIPTION OF THE DRAWINGS

The drawings herein are incorporated in and constitute a part of this specification, showing the embodiments of the present disclosure and, together with the specification, utilized to explain the principles of the present disclosure.
Figure 1 is a flow chart of a vehicle alerting method shown in accordance with an embodiment of the present disclosure, the embodiment is not according to the invention and is present for illustration purposes only;
Figure 2 is a flow chart of a vehicle alerting method shown in accordance with another embodiment of the present disclosure;
Figure 3 is a block diagram of a vehicle alert apparatus according to an embodiment of the present disclosure;
Figure 4 is a block diagram of a vehicle alert apparatus 400 shown in accordance with an embodiment of the present disclosure.

### DETAILED DESCRIPTION

The present disclosure will be described in further detail with reference to the enclosed drawings, to clearly present the objects, technique solutions, and advantages of the present disclosure.

Hereinafter, exemplary embodiments will be described in detail, the embodiments are shown in the drawings. In the following description when referring to the drawings, the same numerals in the different drawings denote the same or similar elements, unless otherwise indicated. The embodiments described in the following exemplary embodiments are not representative of all embodiments consistent with the present disclosure. Rather, they are merely examples of devices and methods consistent with some aspects of the present disclosure as detailed in the claims.

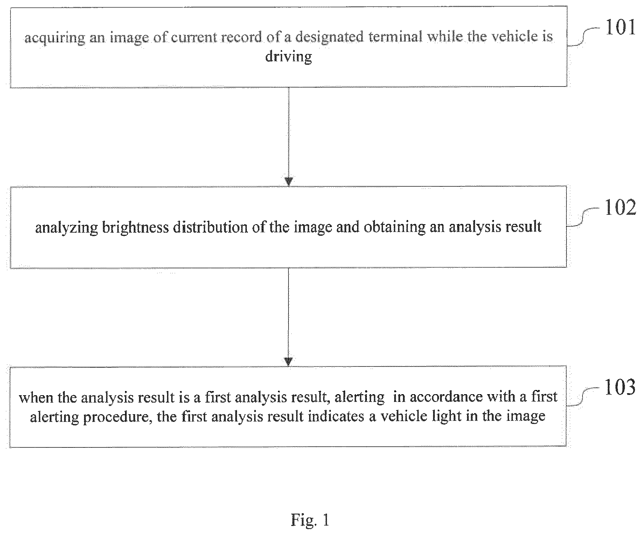

Figure 1 is a flow chart of a vehicle alerting method shown in accordance with an embodiment of the present disclosure, as shown in figure 1, the embodiment is not according to the invention and is present for illustration purposes only, the method comprising:
At step 101, acquiring an image of current record of a designated terminal during driving;
At step 102, analyzing brightness distribution of the image, and obtaining analysis result;
At step 103, when the analysis result is a first analysis result, alerting in accordance with a first alerting procedure, the first analysis result is used for indicating a vehicle light in the image.

With existing technology, driving at night is not safe for drivers. Therefore, there is a need for a vehicle alerting method to alert the driver to the presence of an oncoming vehicle, thereby to avoid traffic accidents and improve driving safety.

In the embodiments of the present disclosure, image is acquired by a vehicle alert apparatus during driving. When other vehicles are present around the driving vehicle where the vehicle alert apparatus is located, the acquired image may catch other vehicles' lights. At night or when the view is not clear, the lights and their background can have a larger brightness contrast displayed on the image. Therefore, the vehicle alert apparatus can analyze the brightness distribution in the image. When the analysis result indicates the presence of the vehicle lights, the driver can be alerted to the oncoming vehicle to improve the driving safety.

In one possible implementation, analyzing the brightness distribution of the image and obtaining an analysis result may comprise:
determining a first ratio, the first ratio being a proportion of pixels within a range of first brightness level to pixels of the image;
determining a second ratio, the second ratio being a proportion of pixels within a range of second brightness level to pixels of the image;
when the first ratio is greater than a first value, and the second ratio is greater than a second value, determining whether the number of consecutive pixels in the pixels within the range of first brightness level is greater than a third value;
when the number of consecutive pixels in the pixels within the range of first brightness level is greater than a third value, obtaining a first analysis result;
wherein the range of first brightness level is greater than the range of second brightness level.

In one possible implementation, the analysis results determined by analyzing the brightness distribution of the image comprises:
when the first ratio is not greater than the first value, or the second ratio is not greater than the second value, obtaining a second analysis result; or
when the number of consecutive pixels in the pixels within the range of first brightness level is not greater than the third value, obtaining a second analysis result.

In one embodiment of the present disclosure, when the analysis result is a first analysis result, alerting with the first alerting procedure, comprising:
when the analysis result is the first analysis result, acquiring continuously at least one image of the current record;
analyzing the brightness distribution of the at least one image, respectively, and obtaining at least one analysis result;
when the at least one analysis result is the first analysis result, alerting with the first alerting procedure.

In one embodiment of the present disclosure, the first alerting procedure is broadcasting a siren; or,
the first alerting procedure is broadcasting a voice alert, the voice alert indicating the presence of the vehicle light; or,
the first alerting procedure is marking an area of the vehicle light on the image; or, the first alerting procedure is popping up an alert window on the image for alerting to the presence of the vehicle light.

In one embodiment of the present disclosure, when the analysis result is a first analysis result, after alerting with the first alerting procedure, the method further comprises:
acquiring continuously at least one image of the current record;
analyzing the brightness distribution of the at least one image, respectively, and obtaining at least one analysis result;
when the at least one analysis result is the first analysis result, and the number of the consecutive pixels in the pixels within the range of first brightness level is incremented in chronological order for the at least one image, alerting with a second alerting procedure, wherein the second alerting procedure is stronger than the first alerting procedure.

All of the selectable technique solutions described above, may be selected in any combination to form alternative embodiments of the present disclosure, and will not be described again herein.

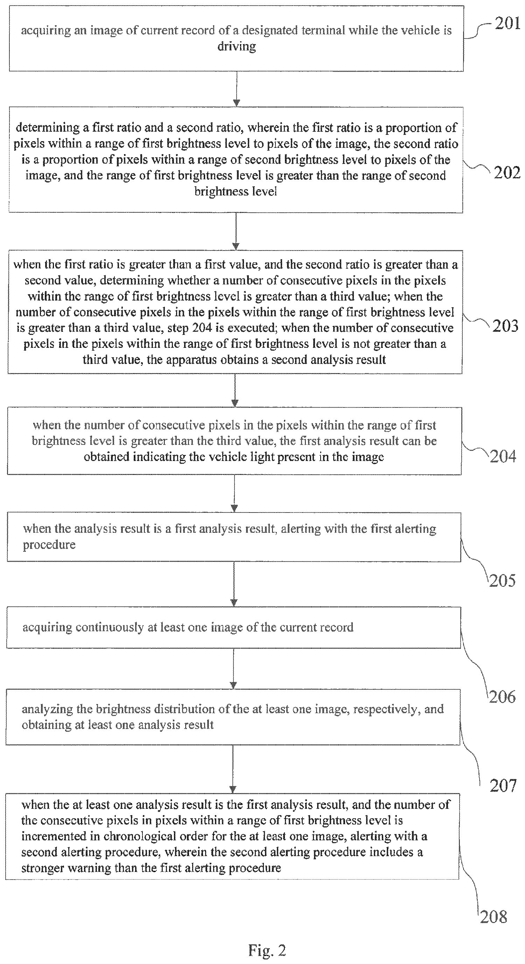

Figure 2 is a flow chart of a vehicle alerting method shown in accordance with an exemplary embodiment of the present disclosure, as shown in Figure 2, for application in a vehicle alert apparatus, the method comprises the following steps:
At step 201, acquiring an image of current record of a designated terminal during driving.

The designated terminal can refer to the terminal used to record the current image during driving. The present disclosure is not limited thereto. For example, the designated terminal may refer to any terminal having a camera, such as a dashboard camera or a mobile phone.

The image of current record is a real-time picture currently shot by the designated terminal during driving. The embodiment of the present disclosure does not limit directions of the images recorded by the designated terminal in the vehicle. For example, the direction may be one of the fronts of the vehicle, the rear of the vehicle, or any side of the vehicle, depending on the orientation of the lens of the designated terminal. Since the vehicle may be present in all directions of the vehicle where the designated terminal is located, the vehicle light may appear in all directions of the vehicle where the terminal is located. Therefore, the designated terminal can be placed according to the actual needs of the user.

In the presently disclosed embodiment, the methods of triggering the vehicle alerting procedure are not limited. For example, in order to improve overall safety of the vehicle during driving, the vehicle alert apparatus can always acquire and analyze the image of the current record of the designated terminal in real time, when the alert device turns on. For another example, in order to make the vehicle alert apparatus more user-friendly and save power, the vehicle alert apparatus can have alerting options, the vehicle alerting process can be triggered when one or more the alerting options is triggered.

At the step 201, the designated terminal may record the current image through the camera, and acquire the image by the vehicle alert apparatus to perform the subsequent analysis process.

At step 202, determining a first ratio and a second ratio, wherein the first ratio is a proportion of pixels within a range of first brightness level to pixels in the image, the second ratio is a proportion of pixels within a range of second brightness level to pixels in the image, the range of first brightness level being greater than the range of second brightness level.

In accordance with the step 201, at step 202, the vehicle alert apparatus can analyze the acquired image.

The inventors realize that the vehicle may turn on the light at night or when the view is not clear due to weather. When other vehicles are present around the driving vehicle where the vehicle alert apparatus is located, the acquired image of the driving vehicle may catch other vehicles' lights. At night or when the view is not clear, the lights and their background can have a larger brightness contrast displayed on the image. Therefore, the vehicle alert apparatus can analyze the brightness distribution in the image.

In general, the higher the value of the brightness of a pixel, the brighter the pixel can be; the lower the value of the brightness of a pixel, the darker the pixel can be. Thus, the range of first brightness level can indicate the range of brighter pixels; the range of second brightness level can indicate the range of darker pixels. In reality, the value of the range of first brightness level should be greater than the value of the range of second brightness level, which is not further limited by the present disclosure. For example, in order to distinguish ranges of the brightness and darkness for more accurate analysis results, the value of the range of first brightness level can be [200,255], and the value of the second brightness level can be [0,50].

At the step 202, in order to determine whether brighter pixels and darker pixels are presented in the acquired image, and to evaluate whether brighter vehicle lights and darker background are present in the image, therefore, the number of pixels in the range of first brightness level and the number of pixels in the range of second brightness level can be calculated, and the calculation result can be divided by a total number of pixels in the image, respectively, and obtaining the first ratio and second ratio.

At step 203, when the first ratio is greater than a first value, and the second ratio is greater than a second value, determining whether the number of consecutive pixels in the pixels within the range of first brightness level is greater than a third value, if yes, executing step 204; if not, obtaining a second analysis result.

In the present embodiment, whether the vehicle light presented in the image can be analyzed by analyzing the image recorded in real time during driving. According to the image, when the vehicle light is in the image, multiple pixels with higher brightness can be in the image.

Based on the above analysis, the first value can be used to determine whether a plurality of pixels in the range of first brightness level of the image, such that, whether the first ratio can reach the first value. Of course, the first value should not be zero, and the present disclosure is not further limited thereto. For example, the first value can be twenty percent.

In reality, during night or unclear vision, lower brightness pixels should be presented in the acquired image. Thus, the second value can be used to determine whether the pixels with lower brightness presented in the image, that is, whether the second ratio can reach the second value. The present embodiment does not limit the second value. For example, since a pixel with lower brightness can be present, the second value may be zero. In general, the nighttime image can have more than one pixel with lower brightness, thus, in order to make the analysis result more accurate, the second value can be ten percent.

At the step 203, when the first ratio and second ratio can satisfy the first value and the second value, respectively, the brighter pixels and darker pixels are present in the image. Therefore, the image to be analyzed can be an image at night or with unclear view, and light source can be found in the image. When the light source is a vehicle light, the brighter pixels in the image can be concentrated in an area, wherein the concentrated area can be characterized as vehicle light.

Based on the above analysis, the third value can be used to determine whether the above-mentioned concentrated area exists in the image. The present embodiment does not limit the third value. For example, taking into account that the shorter the actual distance between the vehicle having the vehicle alert apparatus and the vehicle turning on the vehicle light, the larger the area of the vehicle light in the real-time image can be, and the more the number of brighter pixels in the image can be. Therefore, the third value can be set based on the actual distance, for example, when the actual distance is 50 meters, the total number of pixels in the image is 10000, the third value can be set to 1000. Of course, the present embodiment does not limit setting of the third value. For example, the third value may be set in advance in the vehicle alert apparatus, or, the user may set the third value at an interface provided by the vehicle alert apparatus.

In the embodiments of the present disclosure, when there is a concentrated area, such that a certain number of consecutive pixels can be found in the pixels within the range of first brightness level, that is, the pixels with higher brightness can be continuously distributed in an area of the image. In the evaluation, the vehicle alert apparatus can determine the positions of the pixels in the range of first brightness level in the image, based on the pixel positions of the pixel information acquired at the step 201 by the vehicle alert apparatus, and further determine whether pixels having consecutive positions are in the pixels within the range of first brightness level, wherein the consecutive positions refer to two pixels adjacent to each other. When the pixels having consecutive positions can be found, it can be determined whether the number of the pixels having consecutive positions satisfies the third value.

Noticeably, when the first ratio is not greater than the first value, or the second ratio is not greater than the second value, the second analysis result can be obtained indicating the pixel information in the image is insufficient to characterize the presence of the vehicle light in the image. The second analysis results can indicate no vehicle alert required from the vehicle alert apparatus.

In addition, when the number of consecutive pixels in the pixels within the range of first brightness level is not greater than the third value, the second analysis result can also be obtained indicating the pixel information in the image is insufficient to characterize the presence of the vehicle light in the image. The vehicle alert may not be required from the vehicle alert apparatus.

At step 204, when the number of consecutive pixels in the pixels within the range of first brightness level is greater than the third value, the first analysis result can be obtained indicating the vehicle light present in the image.

Based on the step 203, when the number of consecutive pixels in the pixels within the range of first brightness level is greater than the third value, the first analysis result can be obtained indicating the pixel information in the image is sufficient to characterize the presence of the vehicle light in the image.

Noticeably, step 202 to step 204 can be optional steps of the present embodiment, and by analyzing the brightness of the pixels in the image, whether the vehicle light is present in the image can be accurately determined. In fact, the present embodiments may also adapt other steps to substitute the step 202 to step 204. For example, whether contrast of the image is higher than a predetermined value can be evaluated, wherein the predetermined value can be 500. When the contrast of the image is larger than the predetermined value, whether the area of the image region corresponding to the consecutive pixels in the pixels within the range of first brightness level is larger than the predetermined image area, such that, the area of the image region is 30 square centimeters, the predetermined image area is 9 square centimeters. The first analysis result can be obtained when the area of the image region corresponding to the consecutive pixels in the pixels within the range of first brightness level is larger than the predetermined image area.

At step 205, when the analysis result is the first analysis result, alerting with the first alerting procedure.

The first alerting procedure can refer to the way that the drivers are alerted to the appearance of other vehicles. The embodiment of the present disclosure does not limit the first alerting procedure. For example, the following four first alerting modes can be provided.
1. the first alerting procedure can be broadcasting siren. For example, the vehicle alert apparatus can broadcast a beeping siren through a speaker.
2. the first alerting procedure can be broadcasting voice alerts, wherein the voice alerts can alert to the presence of the vehicle lights. For example, the vehicle alert apparatus can broadcast the voice alerts through the speaker, wherein the voice alerts can be "detected vehicle lights, please drive safely".
3. the first alerting procedure can refer to marking an area of the vehicle light on the image. For example, the vehicle alert apparatus can mark the concentrated area of the pixels with higher brightness of the image in red on the image.
4. the first alerting procedure can refer to popping up an alert window on the image for alerting to the presence of the vehicle light. For example, the alert window can display a red exclamation mark and an alert text, such that, the alert text can be "Detected vehicle lights, please drive safely".

Noticeably, in order to improve the success rate, the above-mentioned various first alerting procedures can also be carried out simultaneously, and may not be limited by the present embodiment. For example, when the options of 1 and 3 of the first alerting procedure are simultaneously performed, the vehicle alert apparatus can mark the area where the vehicle light is present in the image, while broadcasting the siren.

Of course, in order to avoid interference of temporary lighting during driving for a more accurate analysis result, in the current step, further analysis of the current plurality of images can be performed by the following steps 2051 to 2053 to determine whether to alert.

At the step 2051, when the analysis result is the first analysis result, continuously acquiring at least one image of the current record.

At the step 2051, the manner of acquiring each of the at least one image can be the same as above described at the step 201, and will not be described again. The at least one image of the current record can refer to the at least one image in continuous time acquired in real time by the vehicle alert apparatus, when the initial analysis result of the image is determined as the first analysis result in the present embodiment. Of course, the present embodiment does not limit the number of at least one image, for example, the number of at least one image can be five.

At step 2052, analyzing the brightness distribution of the at least one image, respectively, and obtaining at least one analysis result.

The analysis can be performed in series or parallel, and may not be limited by the present embodiment.

At step 2053, when the at least one analysis result is a first analysis result, alerting with the first alerting procedure.

When at least one of the analysis results is the first analysis result, a concentrated area of the pixels with a higher brightness can be found in the at least one image analyzed, such that, the light characterized by the concentrated area may be present for a period of time near the vehicle having the vehicle alert apparatus. Therefore, other vehicles may be determined in the vicinity of the vehicle having the vehicle alert apparatus, and the first alerting procedure may be used for alerting.

Of course, when a second analysis result can be found in the at least one analysis result, the concentrated area of the pixels with higher brightness in the initial analyzed image of the present embodiment may have disappeared, the drivers do not need to be alerted.

At the steps 201 to step 205, the vehicle alert apparatus may complete an initial alerting process. In fact, in order to further improve the driving safety, the image of the current record may be further analyzed based on the initial alerting, when necessary. For example, if vehicle lights are approaching, a second alert process can be carried out.

At the step 206, continuously acquiring the at least one image of the current record.

At the step 206, the at least one image of the current record can be acquired immediately after the first alerting process by the vehicle alert apparatus. Here, the manner of acquiring each of the at least one image can be the same as that of the step 201 above.

At step 207, the brightness distribution of the at least one image can be analyzed, respectively, to obtain the at least one analysis result.

The manner of analyzing the brightness distribution of each of the at least one image can be the same as described at step 202 to step 204 above.

At step 208, when the at least one analysis result is the first analysis result, and the number of the consecutive pixels in the pixels within the range of first brightness level is incremented in chronological order for the at least one image, alerting with a second alerting procedure, wherein the second alerting procedure includes a stronger warning than the first alerting procedure.

The second alerting procedure can be used to alert the driver that other vehicles may be present within a very close distance. The embodiment of the present disclosure does not limit the second alerting procedure. For example, the second alerting procedure may be similar to the first alerting procedure, but may have stronger intensity and thus present stronger warning to the driver. Specific examples may be as follows:
1. the second alerting procedure can be broadcasting siren. For example, the vehicle alert apparatus can broadcast a beeping siren through a speaker. However, the volume of the siren of the second alerting procedure can be higher than that in the first alerting procedure.
2. the second alerting procedure can be broadcasting voice alerts, wherein the voice alerts can alert to the presence of the vehicle lights. For example, the vehicle alert apparatus can broadcast the voice alerts through the speaker, wherein the voice alerts can be "detected vehicle lights, please drive safely". However, the volume of the siren of the second alerting procedure can be higher than that in the first alerting procedure.
3. the second alerting procedure can refer to marking an area of the vehicle light on the image. For example, the vehicle alert apparatus can mark the concentrated area of the pixels with higher brightness of the image in red on the image. However, the mark of the second alerting procedure can be wider than that in the first alerting procedure.
4. the second alerting procedure can refer to popping up an alert window on the image for alerting to the presence of the vehicle light. For example, the alert window can display a red exclamation mark and an alert text, such that, the alert text can be "Detected vehicle lights, please drive safely". However, the alert window of the second alerting procedure can be larger than that in the first alerting procedure.

Noticeably, in order to improve the success rate, the above-mentioned various second alerting procedures can also be carried out simultaneously, and may not be limited by the present embodiment. For example, when the options of 1 and 3 of the second alerting procedure are simultaneously performed, the vehicle alert apparatus can mark the area where the vehicle light is present in the image, while broadcasting the siren.

At step 208, when the at least one analysis result is the first analysis result, the concentrated area of pixels having higher brightness can be present in the analyzed at least one image, such that, the vehicle light characterized by the concentrated area may be present near the vehicle having the vehicle alert apparatus for a certain period of time. Further, when the number of consecutive pixels in the pixels within the range of first brightness level is incremented in chronological order, and the area of the vehicle light occupying the initial analyzed image of the present embodiment is increasing, the vehicle from which the vehicle light is detected is approaching the vehicle equipped with the vehicle alert apparatus. At this moment, a stronger alert can be necessary.

In the embodiment of the present disclosure, the vehicle alert apparatus executing the above-described vehicle alerting method may not be limited. In one possible implementation, the vehicle alert apparatus may include the designated terminal, such that the acquisition of image, the analysis process, and the alerting process can be performed by the designated terminal.

In one possible implementation, the vehicle alert apparatus may be a terminal associated with the designated terminal, such as a mobile phone or a tablet computer. At this time, based on the relationship, the vehicle alert apparatus can acquire and analyze the real-time image from the designated terminal when driving. Regarding the alerting process, the above embodiment can be implemented by the vehicle alert apparatus. In fact, the vehicle alert apparatus may send alerting instructions to the designated terminal based on the relationship, and alert by the designated terminal after receiving the alert instructions.

With known systems, it is unsafe for drivers to drive at night. Therefore, there is a need for a vehicle alerting method to alert drivers to oncoming vehicles, thereby preventing traffic accidents and improving driving safety.

In the present embodiment, images of a driving vehicle can be acquired by the vehicle alert apparatus. When other vehicles are present around the vehicle equipped with the vehicle alert apparatus, lights of the other vehicles may be caught in the acquired images. The lights and background thereof may be displayed on the image with a larger brightness difference, at night or in situations with unclear view. By analyzingalert the brightness distribution of the image, when the analysis result indicates the presence of the vehicle lights, the drivers can be alerted to improve the driving safety.

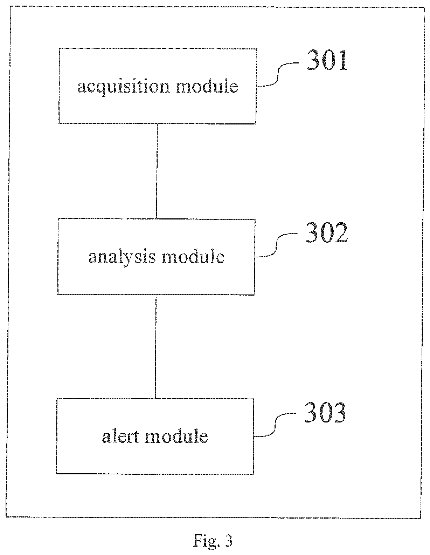

Figure 3 is a block diagram of a vehicle alert apparatus according to an embodiment of the present disclosure. As shown in figure 3, the vehicle alert apparatus can comprise an acquisition module 301, analysis module 302, and alert module 303.

The acquisition module 301 can be configured to acquire an image of a current record of a designated terminal during driving;
The analysis module 302 can be configured to analyze brightness distribution of the image and obtain an analysis result;
The alert module 303 can be configured to alert in accordance with a first alerting procedure when the analysis result is a first analysis result, wherein the first analysis result indicates the presence of vehicle lights in the image.

With known techniques, it is unsafe for drivers to drive at night. Therefore, there is a need for a vehicle alerting method to alert drivers to oncoming vehicles, thereby preventing traffic accidents and improving driving safety.

In the present embodiment, images of a driving vehicle can be acquired by the vehicle alert apparatus. When other vehicles are present around the vehicle equipped with the vehicle alert apparatus, lights of the other vehicles may be caught in the acquired images. The lights and background thereof may be displayed on the image with a larger brightness difference, at night or in situations with unclear view. By analyzingalert the brightness distribution of the image, when the analysis result indicates the presence of the vehicle lights, the drivers can be alerted to improve the driving safety.

In one possible implementation, the analysis module 302 is configured to: determine a first ratio, wherein the first ratio is a proportion of pixels within a range of first brightness level to pixels in the image;
determine a second ratio, wherein the second ratio is a proportion of pixels within a range of second brightness level to pixels in the image;
when the first ratio is greater than a first value, and the second ratio is greater than a second value, determining whether the number of consecutive pixels in the pixels within the range of first brightness level is greater than a third value;
when the number of consecutive pixels in the pixels within the range of first brightness level is greater than the third value, obtaining a first analysis result;
wherein the range of first brightness level is greater than the range of second brightness level.

In one possible implementation, the analysis module 302 can be configured to obtain a second analysis result, when the first ratio is not greater than the first value, or the second ratio is not greater than the second value; or,
the analysis module 302 can be configured to obtain the second analysis result, when the number of consecutive pixels in the pixels within the range of first brightness level is not greater than the third value.

In one embodiment of the present invention, the acquisition module 301 is configured to acquire continuously at least one image of the current record, when the analysis result is a first analysis result;
the analysis module 302 is configured to analyze the brightness distribution of the at least one image, respectively, and obtain at least one analysis result;
the alert module 303 is configured to alert with a first alerting procedure, when the at least one analysis result is the first analysis result.

In one embodiment of the present disclosure, the first alerting procedure is broadcasting a siren; or,
the first alerting procedure is broadcasting a voice alert, the voice alert indicates present of the vehicle light; or,
the first alerting procedure is marking an area of the vehicle light on the image; or the first alerting procedure is popping up an alert window on the image for alerting to the presence of the vehicle light.

In one embodiment of the present disclosure, the acquisition module 301 is configured to acquire continuously at least one image of the current record;
the analysis module 302 is configured to analyze the brightness distribution of the at least one image, respectively, and obtain at least one analysis result;
the alert module 303 is configured to proceed with a second alerting procedure, when the at least one analysis result is the first analysis result, and the number of consecutive pixels in the pixels within the range of first brightness level is incremented in chronological order for the at least one image, wherein the second alerting procedure is stronger than the first alerting procedure.

All of the alternative technique solutions can be selected in any combination to form the embodiments of the present disclosure, and will not be described again herein.

Noticeably, the vehicle alert apparatus provided by the above embodiment is exemplified only by the above division of each of the functional modules when the vehicle alerts. In practice, the above-described functions may be assigned and completed by different functional modules in accordance with requirements, such that the internal structure of the alert device can be divided into different functional modules to complete all or part of the functions described above. In addition, the vehicle alert apparatus and the vehicle alerting method provided in the above embodiment follow the same principle, and the specific implementation process thereof can be described in the method embodiment and will not be described again.

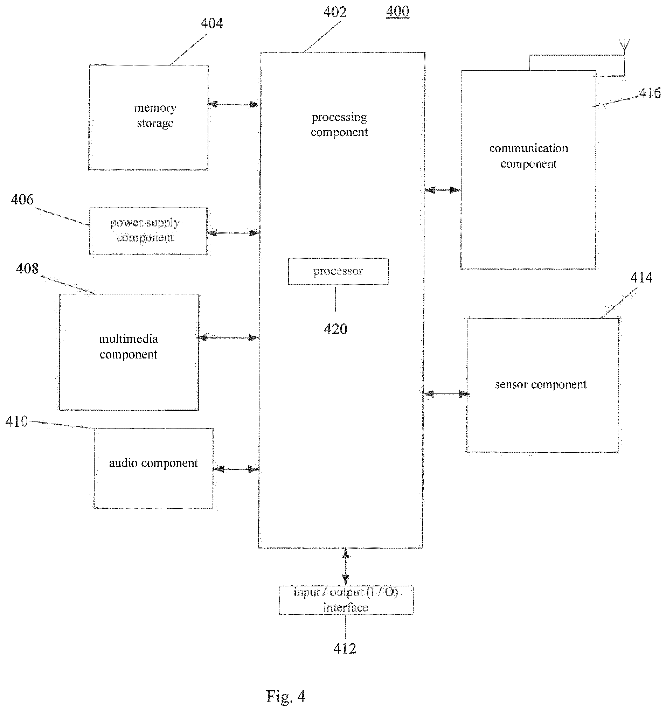

Figure 4 is a block diagram of a vehicle alert apparatus 400 shown in accordance with an embodiment of the present disclosure. For example, the apparatus 400 may include a mobile phone, a dashboard camera, a computer, a digital broadcasting terminal, an information receive/transmit equipment, a game console, a tablet device, a medical device, a fitness device, or a personal digital assistant, etc.

As shown in figure 4, the apparatus 400 may include one or more of the following components: a processing component 402, a memory storage 404, a power supply component 406, a multimedia component 408, an audio component 410, an input / output (I / O) interface 412, a sensor component 414, and a communication component 416.

The processing component 402 generally can control the overall operation of the apparatus 400, such as operations associated with display, telephone calls, data communications, camera operations, and recording operations. The processing component 402 may include one or more processors 420 to execute instructions to complete all or part of the steps described above. In addition, the processing component 402 may include one or more modules to facilitate the interaction between the processing component 402 and other components. For example, the processing component 402 may include a multimedia module to facilitate the interaction between the multimedia component 408 and the processing component 402.

The memory storage 404 can be configured to store various types of data to support the operation of the apparatus 400. Examples of the data can include instructions operating any application or method on the apparatus 400, contact data, phonebook data, messages, pictures, videos, and etc. The memory storage 404 may be implemented by any type of volatile memory devices, nonvolatile memory devices, or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, disk or CD.

The power supply component 406 can provide power to the various components of the apparatus 400. The power supply component 406 may include a power management system, one or more power supplies, and other components associated with generating, managing, and distributing power for the apparatus 400.

The multimedia component 408 can include a screen that provides an output interface between the apparatus 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense gestures of the touch, slide, and touch panels. The touch sensor may sense not only the boundary of the touch or slide action, but also the duration and pressure associated with the touch or slide operation. In some embodiments, the multimedia component 408 can include a front camera and/or a rear camera. When the apparatus 400 is in an operating mode, such as a shooting mode or a video mode, the front camera and/or rear camera may receive external multimedia data. Each front camera and rear camera can be a fixed optical lens system or have focal length and optical zoom capability.

The audio component 410 can be configured to output and/or input audio signals. For example, the audio component 410 can include a microphone (MIC). When the apparatus 400 is in an operating mode, such as a calling mode, a recording mode, and a voice recognition mode, the MIC can be configured to receive external audio signals. The received audio signals may further be stored in the memory storage 404 or transmitted via the communication component 416. In some embodiments, the audio component 410 can also include a speaker for outputting the audio signals.

The I/O interface 412 can provide an interface between the processing component 402 and a peripheral interface module, wherein the peripheral interface module may include a keyboard, a click wheel, a button, etc. The buttons may include, but are not limited to, a home button, a volume button, a start button, and a lock button.

The sensor component 414 can include one or more sensors for providing evaluations of the various aspects of the apparatus 400. For example, the sensor component 414 may detect the on/off state of the apparatus 400, the relative positioning of the component, such that the components can be the display and keypad of the apparatus 400.The sensor component 414 may also detect changes in the positions of the apparatus 400 or any component thereof, the presence or absence of the contact between the user and the apparatus 400, the orientation or acceleration/deceleration of the apparatus 400, and temperature changes of the apparatus 400. The sensor component 414 may include proximity sensors configured to detect the presence of a nearby object without any physical contact. The sensor component 414 may also include optical sensors, such as CMOS or CCD image sensors, for use in imaging applications. In some embodiments, the sensor component 414 may also include acceleration sensors, gyro sensors, magnetic sensors, pressure sensors, or temperature sensors.

The communication component 416 can be configured to facilitate wired or wireless communication between the apparatus 400 and other devices. The apparatus 400 may access a wireless network based on a communication standard, such as WiFi, 2G, 3G, or a combination thereof. In one aspect, the communication component 416 receives a broadcast signal or broadcast related information from an external broadcast management system via a broadcast channel. In an exemplary embodiment, the communication component 416 can also include a near field communication (NFC) module to facilitate short-range communication. For example, the NFC module may be implemented based on radio frequency identification (RFID) technique, infrared data association (IrDA) technique, ultra wideband (UWB) technique, Bluetooth (BT) technique, or other techniques.

In an exemplary embodiment, the apparatus 400 may be implemented by one or more circuitry, which include application specific integrated circuits (ASICs), digital signal processors (DSPs), digital signal processing devices (DSPDs), programmable logic devices (PLDs), field programmable gate array (FPGA), controllers, microcontrollers, microprocessors, or other electronic components for performing the vehicle alerting method described above:
acquiring an image of a current record of a designated terminal during driving;
analyzing brightness distribution of the image and obtaining an analysis result;
alerting in accordance with a first alerting procedure when the analysis result is a first analysis result, wherein the first analysis result indicates the presence of vehicle light in the image.

In one possible implementation, the analysis results determined by analyzing the brightness distribution of the image, comprising:
determining a first ratio, the first ratio is a proportion of pixels within a range of first brightness level to pixels of the image;
determining a second ratio, the second ratio is a proportion of pixels within a range of second brightness level to pixels of the image;
when the first ratio is greater than a first value, and the second ratio is greater than a second value, determining whether the number of consecutive pixels in the pixels within the range of first brightness level is greater than a third value;
when the number of consecutive pixels in the pixels within the range of first brightness level is greater than a third value, obtaining a first analysis result;
wherein the range of first brightness level is greater than the range of second brightness level.

In one possible implementation, the analysis results determined by analyzing the brightness distribution of the image comprises:
when the first ratio is not greater than the first value, or the second ratio is not greater than the second value, obtaining a second analysis result, or,
when the number of consecutive pixels in the pixels within the range of first brightness level is not greater than the third value, obtaining a second analysis result.

In one embodiment of the present invention, when the analysis result is a first analysis result, alerting with the first alerting procedure, comprises:
when the analysis result is the first analysis result, acquiring continuously at least one image of the current record;
analyzing the brightness distribution of the at least one image, respectively, and obtaining at least one analysis result;
when the at least one analysis result is the first analysis result, alerting with the first alerting procedure.

In one embodiment of the present invention, the first alerting procedure is broadcasting a siren; or,
the first alerting procedure is broadcasting a voice alert, the voice alert indicates the presence of the vehicle light; or,
the first alerting procedure is marking an area of the vehicle light on the image; or,
the first alerting procedure is popping up an alert window on the image for alerting to the presence of the vehicle light.

In one embodiment of the present invention, when the analysis result is a first analysis result, after alerting with the first alerting procedure, the method further comprises:
acquiring continuously at least one image of the current record;
analyzing the brightness distribution of the at least one image, respectively, and obtaining at least one analysis result;
when the at least one analysis result is the first analysis result, and the number of the consecutive pixels in the pixels within the range of first brightness level is incremented in chronological order for the at least one image, alerting with a second alerting procedure, wherein the second alerting procedure is stronger than the first alerting procedure.

In an exemplary embodiment, a non-transitory computer readable storage medium containing instructions can also be provided, such as the memory storage 404 comprising the instructions, the instructions may be executed by the processor 420 of the apparatus 400 to perform the method described above. For example, the non-transitory computer readable storage medium may include ROMs, random access memories (RAMs), CD-ROMs, magnetic tapes, floppy disks, and optical data storage devices.

Other embodiments of the present disclosure may be possible to those skilled in the art, upon taking into consideration of the specification and practice of the invention disclosed herein. The present application is intended to cover any variations, uses, or adaptations of the present disclosure, which follow the general principles of the present disclosure and include the common general knowledge or conventional technical solution in the art without departing from the present invention, the true scope of which is defined by the following claims.

Understandably, the present disclosure is not limited to the precise constructions described above and shown in the enclosed drawings, and various modifications and changes may be made without departing from the scope thereof. The scope of the present invention is limited only by the appended claims.

## Claims

1. A vehicle alerting method comprising:
acquiring an image around the vehicle from an in-vehicle camera while the vehicle is driving;
analyzing brightness distribution of the image and obtaining an analysis result; and
when the analysis result is a first analysis result, alerting in accordance with a first alerting procedure, the first analysis result indicates a vehicle light in the image;
when the analysis result is a second analysis result, no vehicle alert is required, the second analysis result indicates that pixel information in the image is insufficient to characterize a presence of the vehicle light in the image;
wherein analyzing the brightness distribution of the image and obtaining the analysis result comprises:
determining a first ratio, the first ratio is a proportion of the number of pixels within a range of first brightness level to the total number of pixels in the image;
determining a second ratio, the second ratio is a proportion of the number of pixels within a range of second brightness level to the total number of pixels in the image;
when the first ratio is greater than a first value, and the second ratio is greater than a second value, determining whether a number of consecutive pixels in the pixels within the range of first brightness level is greater than a third value, wherein the consecutive pixels are the pixels that having consecutive positions, the consecutive positions refer to two pixels being adjacent to each other, and wherein the first value is greater than zero; and
when the determined number of consecutive pixels in the pixels within the range of first brightness level is greater than a third value, obtaining the first analysis result;
when the first ratio is not greater than the first value, or the second ratio is not greater than the second value, or the determined number of consecutive pixels in the pixels within the range of first brightness level is not greater than a third value, obtaining the second analysis result;
wherein brightness values in the range of first brightness level are higher than brightness values in the range of second brightness level.

2. The method of claim 1 wherein the alerting in accordance with a first alerting procedure includes:
when the analysis result is the first analysis result, acquiring a plurality of images continuously in time;
analyzing the brightness distribution of the plurality of images, respectively, and obtaining a plurality of analysis results; and
when the plurality of analysis results are the first analysis results, alerting with the first alerting procedure.

3. The method of any preceding claim wherein the first alerting procedure includes:
broadcasting a siren; or
broadcasting a voice alert, the voice alert indicating presence of the vehicle light; or
marking an area of the vehicle light on the image; or
popping up an alert window on the image for alerting to the presence of the vehicle light.

4. The method of claim 1 further comprising:
when the analysis result is a first analysis result, after alerting with the first alerting procedure,
acquiring a plurality of images continuously in time;
analyzing the brightness distribution of the plurality of images, respectively, and obtaining a plurality of analysis results, and
when the plurality of analysis results are the first analysis result, and the number of the consecutive pixels in the pixels within the range of first brightness level is incremented in chronological order for the plurality of images, alerting with a second alerting procedure.

5. A vehicle alert apparatus comprising:
an acquisition module (301) acquiring an image around the vehicle from an in-vehicle camera during driving;
an analysis module (302) analyzing brightness distribution of the image and obtaining an analysis result; and
an alert module (303) alerting in accordance with a first alerting procedure when the analysis result is a first analysis result, wherein the first analysis result indicates the presence of vehicle light in the image, when the analysis result is a second analysis result, no vehicle alert is required, the second analysis result indicates that pixel information in the image is insufficient to characterize a presence of the vehicle light in the image;
wherein the analysis module is further configured to:
determine a first ratio, wherein the first ratio is a proportion of the number of pixels within a range of first brightness level to the total number of pixels in the image;
determine a second ratio, wherein the second ratio is a proportion of the number of pixels within a range of second brightness level to the total number of pixels in the image;
when the first ratio is greater than a first value, and the second ratio is greater than a second value, determining whether the number of consecutive pixels in the pixels within the range of first brightness level is greater than a third value, wherein the consecutive pixels are the pixels that having consecutive positions , the consecutive positions refer to two pixels being adjacent to each other, and wherein the first value is greater than zero;
when the determined number of consecutive pixels in the pixels within the range of first brightness level is greater than the third value, obtain a first analysis result; and
when the first ratio is not greater than the first value, or the second ratio is not greater than the second value, or the determined number of consecutive pixels in the pixels within the range of first brightness level is not greater than a third value, obtaining the second analysis result;
wherein brightness values in the range of first brightness level are higher than brightness values in the range of second brightness level.

6. The apparatus of claim 5 wherein the acquisition module is further configured to:
acquire a plurality of images continuously in time, when the analysis result is a first analysis result;
analyze the brightness distribution of the plurality of images, respectively, and obtain a plurality of analysis results; and
wherein the alert module is further configured to alert with a first alerting procedure, when the plurality of analysis results are the first analysis results.

7. The apparatus of any of claims 5 or 6 wherein the first alerting procedure includes:
broadcasting a siren; or
broadcasting a voice alert, the voice alert indicating presence of the vehicle light; or
marking an area of the vehicle light on the image; or
popping up an alert window on the image for alerting to the presence of the vehicle light.

8. The apparatus of claim 5 wherein
the acquisition module (301) is further configured to acquire a plurality of images continuously in time;
the analysis module (302) is further configured to analyze the brightness distribution of the plurality of images, respectively, and obtaining a plurality of analysis results; and
the alert module (303) is further configured to, when the plurality of analysis results are the first analysis result, and the number of consecutive pixels in the pixels within the range of first brightness level is incremented in chronological order for the plurality of images, proceed with a second alerting procedure.

9. A vehicle alert apparatus comprising:
a processor (402);
a non-transitional memory storage (404) storing instructions executed by the processor; and
wherein the processor is configured to perform steps comprising:
acquiring an image around the vehicle from an in-vehicle camera during driving;
analyzing brightness distribution of the image and obtain an analysis result; and
alerting in accordance with a first alerting procedure when the analysis result is a first analysis result, wherein the first analysis result indicates the presence of vehicle light in the image;
when the analysis result is a second analysis result, no vehicle alert is required, the second analysis result indicates that pixel information in the image is insufficient to characterize a presence of the vehicle light in the image;
wherein the act of analyzing brightness distribution of the image and obtaining an analysis result comprises:
determining a first ratio, the first ratio is a proportion of the number of pixels within a range of first brightness level to the total number of pixels in the image;
determining a second ratio, the second ratio is a proportion of the number of pixels within a range of second brightness level to the total number of pixels in the image;
when the first ratio is greater than a first value, and the second ratio is greater than a second value, determining whether a number of consecutive pixels in the pixels within the range of first brightness level is greater than a third value, wherein the consecutive pixels are the pixels that having consecutive positions, the consecutive positions refer to two pixels being adjacent to each other, and wherein the first value is greater than zero; and
when the determined number of consecutive pixels in the pixels within the range of first brightness level is greater than a third value, obtaining the first analysis result;
when the first ratio is not greater than the first value, or the second ratio is not greater than the second value, or the determined number of consecutive pixels in the pixels within the range of first brightness level is not greater than a third value, obtaining the second analysis result;
wherein brightness values in the range of first brightness level are higher than brightness values in the range of second brightness level.

10. A non-transitory computer readable storage medium comprising instructions causing one or more processor to perform acts comprising:
acquiring an image around the vehicle from an in-vehicle camera while the vehicle is driving;
analyzing brightness distribution of the image and obtaining an analysis result; and
when the analysis result is a first analysis result, alerting in accordance with a first alerting procedure, the first analysis result indicating a vehicle light in the image;
when the analysis result is a second analysis result, no vehicle alert is required, the second analysis result indicates that pixel information in the image is insufficient to characterize a presence of the vehicle light in the image;
wherein the act of analyzing brightness distribution of the image and obtaining an analysis result comprises:
determining a first ratio, the first ratio is a proportion of the number of pixels within a range of first brightness level to the total number of pixels in the image;
determining a second ratio, the second ratio is a proportion of the number of pixels within a range of second brightness level to the total number of pixels in the image;
when the first ratio is greater than a first value, and the second ratio is greater than a second value, determining whether a number of consecutive pixels in the pixels within the range of first brightness level is greater than a third value, wherein the consecutive pixels are the pixels that having consecutive positions, the consecutive positions refer to two pixels being adjacent to each other, and wherein the first value is greater than zero; and
when the determined number of consecutive pixels in the pixels within the range of first brightness level is greater than a third value, obtaining the first analysis result;
when the first ratio is not greater than the first value, or the second ratio is not greater than the second value, or the determined number of consecutive pixels in the pixels within the range of first brightness level is not greater than a third value, obtaining the second analysis result;
wherein brightness values in the range of first brightness level are higher than brightness values in the range of second brightness level.

11. The non-transitory computer readable storage medium of claim 10 wherein the first alerting procedure includes:
broadcasting a siren; or
broadcasting a voice alert, the voice alert indicating presence of the vehicle light; or
marking an area of the vehicle light on the image; or
popping up an alert window on the image for alerting to the presence of the vehicle light.

## Patentansprüche

1. Verfahren zur Fahrzeugwarnung, umfassend:
Aufnehmen eines Bildes der Umgebung des Fahrzeugs mit einer fahrzeuginternen Kamera während der Fahrt des Fahrzeugs;
Analysieren der Helligkeitsverteilung des Bildes und Erzielen eines Analyseergebnisses; und
wenn das Analyseergebnis ein erstes Analyseergebnis ist, Warnen gemäß einem ersten Warnverfahren, wobei das erste Analyseergebnis ein Fahrzeuglicht im Bild anzeigt;
wenn das Analyseergebnis ein zweites Analyseergebnis ist, ist keine Fahrzeugwarnung erforderlich, wobei das zweite Analyseergebnis anzeigt, dass die Pixelinformationen im Bild nicht ausreichen, um ein Vorhandensein des Fahrzeuglichts im Bild zu charakterisieren;
wobei das Analysieren der Helligkeitsverteilung des Bildes und das Erhalten des Analyseergebnisses umfasst:
Bestimmen eines ersten Verhältnisses, wobei das erste Verhältnis ein Anteil der Anzahl der Pixel innerhalb eines Bereichs eines ersten Helligkeitsniveaus an der Gesamtzahl der Pixel in dem Bild ist;
Bestimmen eines zweiten Verhältnisses, wobei das zweite Verhältnis ein Anteil der Anzahl der Pixel innerhalb eines Bereichs des zweiten Helligkeitsniveaus an der Gesamtzahl der Pixel im Bild ist;
wenn das erste Verhältnis größer als ein erster Wert ist und das zweite Verhältnis größer als ein zweiter Wert ist, Bestimmen, ob eine Anzahl von aufeinanderfolgenden Pixeln in den Pixeln innerhalb des Bereichs des ersten Helligkeitsniveaus größer als ein dritter Wert ist, wobei die aufeinanderfolgenden Pixel die Pixel sind, die aufeinanderfolgende Positionen haben, wobei sich die aufeinanderfolgenden Positionen auf zwei Pixel beziehen, die einander benachbart sind, und wobei der erste Wert größer als Null ist; und
wenn die ermittelte Anzahl von aufeinanderfolgenden Pixeln in den Pixeln innerhalb des Bereichs des ersten Helligkeitsniveaus größer als ein dritter Wert ist, Erhalten des ersten Analyseergebnisses;
wenn das erste Verhältnis nicht größer als der erste Wert ist, oder das zweite Verhältnis nicht größer als der zweite Wert ist, oder die ermittelte Anzahl von aufeinanderfolgenden Pixeln in den Pixeln innerhalb des Bereichs des ersten Helligkeitsniveaus nicht größer als ein dritter Wert ist, Erhalten des zweiten Analyseergebnisses;
wobei Helligkeitswerte im Bereich des ersten Helligkeitsniveaus höher sind als Helligkeitswerte im Bereich des zweiten Helligkeitsniveaus.

2. Verfahren nach Anspruch 1, wobei das Warnen gemäß einem ersten Warnverfahren umfasst:
wenn das Analyseergebnis das erste Analyseergebnis ist, Aufnehmen einer Vielzahl von Bildern kontinuierlich in der Zeit;
Analysieren der Helligkeitsverteilung der Vielzahl von Bildern und Erhalten einer Vielzahl von Analyseergebnissen; und
wenn die mehreren Analyseergebnisse die ersten Analyseergebnisse sind, Warnen gemäß dem ersten Warnverfahren.

3. Verfahren nach einem der vorhergehenden Ansprüche, wobei das erste Warnverfahren umfasst:
Senden einer Sirene; oder
Senden einer Sprachwarnung, wobei die Sprachwarnung das Vorhandensein des Fahrzeuglichts anzeigt; oder
Markieren eines Bereichs des Fahrzeuglichts auf dem Bild; oder
Einblenden eines Warnfensters auf dem Bild, um auf das Vorhandensein des Fahrzeuglichts hinzuweisen.

4. Verfahren nach Anspruch 1, ferner umfassend:
wenn das Analyseergebnis ein erstes Analyseergebnis ist, nach dem Warnen gemäß dem ersten Warnverfahren,
Erfassen einer Vielzahl von Bildern kontinuierlich in der Zeit;
Analysieren der Helligkeitsverteilung der Vielzahl von Bildern und Erhalten einer Vielzahl von Analyseergebnissen und
wenn es sich bei der Vielzahl von Analyseergebnissen um das erste Analyseergebnis handelt und die Anzahl der aufeinanderfolgenden Pixel in den Pixeln innerhalb des Bereichs des ersten Helligkeitsniveaus in chronologischer Reihenfolge für die Vielzahl von Bildern erhöht wird, Warnen gemäß einem zweiten Warnverfahren.

5. Fahrzeugwarngerät, das aufweist:
ein Erfassungsmodul (301), das während der Fahrt ein Bild um das Fahrzeug von einer bordeigenen Kamera aufnimmt;
ein Analysemodul (302), das die Helligkeitsverteilung des Bildes analysiert und ein Analyseergebnis erhält; und
ein Warnmodul (303), das gemäß einem ersten Warnverfahren warnt, wenn das Analyseergebnis ein erstes Analyseergebnis ist, wobei das erste Analyseergebnis das Vorhandensein von Fahrzeuglicht in dem Bild anzeigt, wenn das Analyseergebnis ein zweites Analyseergebnis ist, keine Fahrzeugwarnung erforderlich ist, wobei das zweite Analyseergebnis anzeigt, dass Pixelinformationen in dem Bild unzureichend sind, um ein Vorhandensein des Fahrzeuglichts in dem Bild zu charakterisieren;
wobei das Analysemodul ferner konfiguriert ist zum:
Bestimmen eines ersten Verhältnisses, wobei das erste Verhältnis ein Anteil der Anzahl von Pixeln innerhalb eines Bereichs eines ersten Helligkeitsniveaus zu der Gesamtzahl von Pixeln in dem Bild ist;
Bestimmen eines zweiten Verhältnisses, wobei das zweite Verhältnis ein Anteil der Anzahl von Pixeln innerhalb eines Bereichs des zweiten Helligkeitsniveaus an der Gesamtzahl von Pixeln in dem Bild ist;
wenn das erste Verhältnis größer als ein erster Wert ist und das zweite Verhältnis größer als ein zweiter Wert ist, Bestimmen, ob die Anzahl von aufeinanderfolgenden Pixeln in den Pixeln innerhalb des Bereichs des ersten Helligkeitsniveaus größer als ein dritter Wert ist, wobei die aufeinanderfolgenden Pixel die Pixel sind, die aufeinanderfolgende Positionen haben, wobei sich die aufeinanderfolgenden Positionen auf zwei Pixel beziehen, die einander benachbart sind, und wobei der erste Wert größer als Null ist;
wenn die ermittelte Anzahl von aufeinanderfolgenden Pixeln in den Pixeln innerhalb des Bereichs des ersten Helligkeitsniveaus größer als der dritte Wert ist, Erhalten eines ersten Analyseergebnisses; und
wenn das erste Verhältnis nicht größer als der erste Wert ist, oder das zweite Verhältnis nicht größer als der zweite Wert ist, oder die ermittelte Anzahl von aufeinanderfolgenden Pixeln in den Pixeln innerhalb des Bereichs des ersten Helligkeitsniveaus nicht größer als ein dritter Wert ist, Erhalten des zweiten Analyseergebnisses;
wobei Helligkeitswerte im Bereich des ersten Helligkeitsniveaus höher sind als Helligkeitswerte im Bereich des zweiten Helligkeitsniveaus.

6. Vorrichtung nach Anspruch 5, wobei das Erfassungsmodul ferner so konfiguriert ist zum:
Aufnehmen einer Vielzahl von Bildern kontinuierlich in der Zeit, wenn das Analyseergebnis ein erstes Analyseergebnis ist;
Analysieren der Helligkeitsverteilung der Vielzahl von Bildern und Erhalten einer Vielzahl von Analyseergebnissen ; und
wobei das Warnmodul ferner konfiguriert ist zum Warnen gemäß einem ersten Warnverfahren, wenn die mehreren Analyseergebnisse die ersten Analyseergebnisse sind.

7. Vorrichtung nach einem der Ansprüche 5 oder 6, wobei das erste Warnverfahren umfasst:
Senden einer Sirene; oder
Senden einer Sprachwarnung, wobei die Sprachwarnung das Vorhandensein des Fahrzeuglichts anzeigt; oder
Markieren eines Bereichs des Fahrzeuglichts auf dem Bild; oder
Einblenden eines Warnfensters auf dem Bild, um auf das Vorhandensein des Fahrzeuglichts hinzuweisen.

8. Vorrichtung nach Anspruch 5, wobei
das Erfassungsmodul (301) ferner konfiguriert zum Erfasseneiner Vielzahl von Bildern kontinuierlich in der Zeit;
das Analysemodul (302) ferner konfiguriert ist zum Analysieren der Helligkeitsverteilung der Mehrzahl von Bildern und Erhalten einer Mehrzahl von Analyseergebnissen; und
das Warnmodul (303) ferner so konfiguriert ist, dass es, wenn die mehreren Analyseergebnisse das erste Analyseergebnis sind und die Anzahl der aufeinanderfolgenden Pixel in den Pixeln innerhalb des Bereichs des ersten Helligkeitsniveaus in chronologischer Reihenfolge für die mehreren Bilder erhöht wird, mit einem zweiten Warnverfahren fortfährt.

9. Fahrzeugwarngerät, aufweisend:
einen Prozessor (402);
einen nicht-transitorischen Speicher (404), der vom Prozessor ausgeführte Befehle speichert; und
wobei der Prozessor so konfiguriert ist, dass er die folgenden Schritte durchführt:
Aufnehmen eines Bildes der Umgebung des Fahrzeugs mit einer fahrzeugeigenen Kamera während der Fahrt;
Analysieren der Helligkeitsverteilung des Bildes und Erhalten eines Analyseergebnisses; und
Warnen in Übereinstimmung mit einem ersten Warnverfahren, wenn das Analyseergebnis ein erstes Analyseergebnis ist, wobei das erste Analyseergebnis das Vorhandensein von Fahrzeuglicht im Bild anzeigt;
wenn das Analyseergebnis ein zweites Analyseergebnis ist, ist kein Fahrzeugalarm erforderlich, wobei das zweite Analyseergebnis anzeigt, dass die Pixelinformationen im Bild nicht ausreichen, um ein Vorhandensein des Fahrzeuglichts im Bild zu charakterisieren;
wobei der Vorgang des Analysierens der Helligkeitsverteilung des Bildes und des Erhaltens eines Analyseergebnisses umfasst:
Bestimmen eines ersten Verhältnisses, wobei das erste Verhältnis ein Anteil der Anzahl von Pixeln innerhalb eines Bereichs eines ersten Helligkeitsniveaus an der Gesamtzahl von Pixeln in dem Bild ist;
Bestimmen eines zweiten Verhältnisses, wobei das zweite Verhältnis ein Anteil der Anzahl der Pixel innerhalb eines Bereichs des zweiten Helligkeitsniveaus an der Gesamtzahl der Pixel in dem Bild ist;
wenn das erste Verhältnis größer als ein erster Wert ist und das zweite Verhältnis größer als ein zweiter Wert ist, Bestimmen, ob eine Anzahl von aufeinanderfolgenden Pixeln in den Pixeln innerhalb des Bereichs des ersten Helligkeitsniveaus größer als ein dritter Wert ist, wobei die aufeinanderfolgenden Pixel die Pixel sind, die aufeinanderfolgende Positionen haben, wobei sich die aufeinanderfolgenden Positionen auf zwei Pixel beziehen, die einander benachbart sind, und wobei der erste Wert größer als Null ist; und
wenn die ermittelte Anzahl von aufeinanderfolgenden Pixeln in den Pixeln innerhalb des Bereichs des ersten Helligkeitsniveaus größer als ein dritter Wert ist, Erhalten des ersten Analyseergebnisses;
wenn das erste Verhältnis nicht größer als der erste Wert ist, oder das zweite Verhältnis nicht größer als der zweite Wert ist, oder die ermittelte Anzahl von aufeinanderfolgenden Pixeln in den Pixeln innerhalb des Bereichs des ersten Helligkeitsniveaus nicht größer als ein dritter Wert ist, Erhalten des zweiten Analyseergebnisses;
wobei Helligkeitswerte im Bereich des ersten Helligkeitsniveaus höher sind als Helligkeitswerte im Bereich des zweiten Helligkeitsniveaus.

10. Nicht-transitorisches computerlesbares Speichermedium, das Anweisungen enthält, die einen oder mehrere Prozessoren veranlassen, Handlungen auszuführen, die Folgendes umfassen:
Aufnehmen eines Bildes der Umgebung des Fahrzeugs mit einer fahrzeugeigenen Kamera während der Fahrt;
Analysieren der Helligkeitsverteilung des Bildes und Erhalten eines Analyseergebnisses; und
Warnen in Übereinstimmung mit einem ersten Warnverfahren, wenn das Analyseergebnis ein erstes Analyseergebnis ist, wobei das erste Analyseergebnis das Vorhandensein von Fahrzeuglicht im Bild anzeigt;
wenn das Analyseergebnis ein zweites Analyseergebnis ist, ist kein Fahrzeugalarm erforderlich, wobei das zweite Analyseergebnis anzeigt, dass die Pixelinformationen im Bild nicht ausreichen, um ein Vorhandensein des Fahrzeuglichts im Bild zu charakterisieren;
wobei der Vorgang des Analysierens der Helligkeitsverteilung des Bildes und des Erhaltens eines Analyseergebnisses umfasst:
Bestimmen eines ersten Verhältnisses, wobei das erste Verhältnis ein Anteil der Anzahl von Pixeln innerhalb eines Bereichs eines ersten Helligkeitsniveaus an der Gesamtzahl von Pixeln in dem Bild ist;
Bestimmen eines zweiten Verhältnisses, wobei das zweite Verhältnis ein Anteil der Anzahl der Pixel innerhalb eines Bereichs des zweiten Helligkeitsniveaus an der Gesamtzahl der Pixel in dem Bild ist;
wenn das erste Verhältnis größer als ein erster Wert ist und das zweite Verhältnis größer als ein zweiter Wert ist, Bestimmen, ob eine Anzahl von aufeinanderfolgenden Pixeln in den Pixeln innerhalb des Bereichs des ersten Helligkeitsniveaus größer als ein dritter Wert ist, wobei die aufeinanderfolgenden Pixel die Pixel sind, die aufeinanderfolgende Positionen haben, wobei sich die aufeinanderfolgenden Positionen auf zwei Pixel beziehen, die einander benachbart sind, und wobei der erste Wert größer als Null ist; und
wenn die ermittelte Anzahl von aufeinanderfolgenden Pixeln in den Pixeln innerhalb des Bereichs des ersten Helligkeitsniveaus größer als ein dritter Wert ist, Erhalten des ersten Analyseergebnisses;
wenn das erste Verhältnis nicht größer als der erste Wert ist, oder das zweite Verhältnis nicht größer als der zweite Wert ist, oder die ermittelte Anzahl von aufeinanderfolgenden Pixeln in den Pixeln innerhalb des Bereichs des ersten Helligkeitsniveaus nicht größer als ein dritter Wert ist, Erhalten des zweiten Analyseergebnisses;
wobei Helligkeitswerte im Bereich des ersten Helligkeitsniveaus höher sind als Helligkeitswerte im Bereich des zweiten Helligkeitsniveaus.

11. Nicht-transitorisches computerlesbares Speichermedium nach Anspruch 10 , wobei die erste Warnverfahren umfasst:
Senden einer Sirene; oder
Senden einer Sprachwarnung, wobei die Sprachwarnung das Vorhandensein des Fahrzeuglichts anzeigt; oder
Markieren eines Bereichs des Fahrzeuglichts auf dem Bild; oder
Einblenden eines Warnfensters auf dem Bild, um auf das Vorhandensein des Fahrzeuglichts hinzuweisen.

## Revendications

1. Méthode d'alerte de véhicule comprenant
acquérir une image autour du véhicule à partir d'une caméra embarquée pendant que le véhicule roule ;
analyser la distribution de la luminosité de l'image et obtention d'un résultat d'analyse ; et
lorsque le résultat de l'analyse est un premier résultat d'analyse, alerte conformément à une première procédure d'alerte, le premier résultat d'analyse indiquant un feu de véhicule sur l'image ;
lorsque le résultat de l'analyse est un deuxième résultat, aucune alerte véhicule n'est requise, le deuxième résultat de l'analyse indique que les informations sur les pixels de l'image sont insuffisantes pour caractériser la présence de la lumière du véhicule dans l'image ;
dans lequel analyse la distribution de la luminosité de l'image et obtient le résultat de l'analyse comprend :
déterminer un premier rapport, le premier rapport étant une proportion du nombre de pixels situés dans une plage du premier niveau de luminosité par rapport au nombre total de pixels de l'image ;
déterminer un second rapport, le second rapport étant une proportion du nombre de pixels situés dans une plage du second niveau de luminosité par rapport au nombre total de pixels de l'image ;
lorsque le premier rapport est supérieur à une première valeur et que le deuxième rapport est supérieur à une deuxième valeur, déterminer si un nombre de pixels consécutifs dans les pixels dans la plage du premier niveau de luminosité est supérieur à une troisième valeur, dans laquelle les pixels consécutifs sont les pixels qui ont des positions consécutives les positions consécutives font référence à deux pixels adjacents l'un à l'autre, et dans laquelle la première valeur est supérieure à zéro ; et
lorsque le nombre déterminé de pixels consécutifs dans les pixels situés dans la plage du premier niveau de luminosité est supérieur à une troisième valeur, obtenir le premier résultat de l'analyse ;
lorsque le premier rapport n'est pas supérieur à la première valeur, ou que le deuxième rapport n'est pas supérieur à la deuxième valeur, ou que le nombre déterminé de pixels consécutifs dans les pixels situés dans la plage du premier niveau de luminosité n'est pas supérieur à une troisième valeur, obtenir le deuxième résultat de l'analyse ;
dans lequel les valeurs de luminosité dans la plage du premier niveau de luminosité sont plus élevées que les valeurs de luminosité dans la plage du second niveau de luminosité.

2. La méthode de la revendication 1, dans laquelle l'alerte conformément à une première procédure d'alerte comprend :
lorsque le résultat de l'analyse est le premier résultat de l'analyse, acquérir une pluralité d'images en continu dans le temps ;
analyser la distribution de la luminosité de la pluralité d'images, respectivement, et obtenir une pluralité de résultats d'analyse ; et
lorsque la pluralité de résultats d'analyse correspond aux premiers résultats d'analyse, l'alerte est déclenchée au moyen de la première procédure d'alerte.

3. La méthode de toute revendication précédente, dans laquelle la première procédure d'alerte comprend :
diffuser une sirène ; ou
diffuser une alerte vocale, l'alerte vocale indiquant la présence du feu du véhicule ; ou
marquer une zone de la lumière du véhicule sur l'image ; ou
faire apparaître une fenêtre d'alerte sur l'image pour signaler la présence du feu du véhicule.

4. La méthode de la revendication 1, comprend en outre
lorsque le résultat de l'analyse est un premier résultat d'analyse, après avoir lancé l'alerte au moyen de la première procédure d'alerte,
acquérir une pluralité d'images en continu dans le temps ;
analyser la distribution de la luminosité de la pluralité d'images, respectivement, et obtenir une pluralité de résultats d'analyse, et
lorsque la pluralité de résultats d'analyse correspond au premier résultat d'analyse et que le nombre de pixels consécutifs dans les pixels situés dans la plage du premier niveau de luminosité est incrémenté dans l'ordre chronologique pour la pluralité d'images, l'alerte est déclenchée par une deuxième procédure d'alerte.

5. Appareil d'alerte pour véhicule comprenant
un module d'acquisition (301) qui acquiert une image autour du véhicule à partir d'une caméra embarquée pendant la conduite ;
un module d'analyse (302) qui analysant la distribution de la luminosité de l'image et obtenant un résultat d'analyse ; et
un module d'alerte (303) qui alertant conformément à une première procédure d'alerte lorsque le résultat de l'analyse est un premier résultat d'analyse, dans lequel le premier résultat d'analyse indique la présence d'une lumière de véhicule dans l'image, lorsque le résultat de l'analyse est un deuxième résultat d'analyse, aucune alerte de véhicule n'est requise, le deuxième résultat d'analyse indique que l'information de pixel dans l'image est insuffisante pour caractériser la présence d'une lumière de véhicule dans l'image ;
le module d'analyse est en outre configuré pour :
déterminer un premier rapport, dans lequel le premier rapport est une proportion du nombre de pixels dans une plage du premier niveau de luminosité par rapport au nombre total de pixels dans l'image ;
déterminer un deuxième rapport, dans lequel le deuxième rapport est une proportion du nombre de pixels situés dans une plage du deuxième niveau de luminosité par rapport au nombre total de pixels de l'image ;
lorsque le premier rapport est supérieur à une première valeur et que le deuxième rapport est supérieur à une deuxième valeur, déterminer si le nombre de pixels consécutifs dans les pixels situés dans la plage du premier niveau de luminosité est supérieur à une troisième valeur, les pixels consécutifs étant les pixels ayant des positions consécutives les positions consécutives font référence à deux pixels adjacents l'un à l'autre, et la première valeur étant supérieure à zéro ;
lorsque le nombre déterminé de pixels consécutifs dans les pixels situés dans la plage du premier niveau de luminosité est supérieur à la troisième valeur, obtenir un premier résultat d'analyse ; et
lorsque le premier rapport n'est pas supérieur à la première valeur, ou que le deuxième rapport n'est pas supérieur à la deuxième valeur, ou que le nombre déterminé de pixels consécutifs dans les pixels situés dans la plage du premier niveau de luminosité n'est pas supérieur à une troisième valeur, obtenir le deuxième résultat de l'analyse ;
dans lequel les valeurs de luminosité dans la plage du premier niveau de luminosité sont plus élevées que les valeurs de luminosité dans la plage du second niveau de luminosité.

6. L'appareil de la revendication 5, dans lequel le module d'acquisition est en outre configuré pour :
acquérir une pluralité d'images en continu dans le temps, lorsque le résultat de l'analyse est un premier résultat d'analyse ;
analyser la distribution de la luminosité de la pluralité d'images, respectivement, et obtenir une pluralité de résultats d'analyse ; et
le module d'alerte est en outre configuré pour donner l'alerte au moyen d'une première procédure d'alerte, lorsque la pluralité de résultats d'analyse correspond aux premiers résultats d'analyse.

7. L'appareil de l'une des revendications 5 ou 6, dans lequel la première procédure d'alerte comprend :
diffuser une sirène ; ou
diffuser une alerte vocale, l'alerte vocale indiquant la présence du feu du véhicule ; ou
marquer une zone de la lumière du véhicule sur l'image ; ou
faire apparaître une fenêtre d'alerte sur l'image pour signaler la présence du feu du véhicule.

8. L'appareil de la revendication 5, dans lequel
le module d'acquisition (301) est en outre configuré pour acquérir une pluralité d'images en continu dans le temps ;
le module d'analyse (302) est en outre configuré pour analyser la distribution de la luminosité de la pluralité d'images, respectivement, et obtenir une pluralité de résultats d'analyse ; et
le module d'alerte (303) est en outre configuré pour, lorsque la pluralité de résultats d'analyse est le premier résultat d'analyse et que le nombre de pixels consécutifs dans les pixels compris dans la plage du premier niveau de luminosité est incrémenté dans l'ordre chronologique pour la pluralité d'images, procéder à une deuxième procédure d'alerte.

9. Appareil d'alerte pour véhicule comprenant
un processeur (402) ;
une mémoire non transitoire (404) stockant des instructions exécutées par le processeur ; et
dans lequel le processeur est configuré pour effectuer les étapes suivantes :
acquérir une image autour du véhicule à partir d'une caméra embarquée pendant la conduite ;
analyser la distribution de la luminosité de l'image et obtenir un résultat d'analyse ; et
alerte conformément à une première procédure d'alerte lorsque le résultat de l'analyse est un premier résultat d'analyse, dans lequel le premier résultat d'analyse indique la présence d'une lumière de véhicule dans l'image ;
lorsque le résultat de l'analyse est un deuxième résultat, aucune alerte véhicule n'est requise, le deuxième résultat de l'analyse indique que les informations sur les pixels de l'image sont insuffisantes pour caractériser la présence de la lumière du véhicule dans l'image ;
dans lequel l'analyse de la distribution de la luminosité de l'image et l'obtention d'un résultat d'analyse comprennent :
déterminer un premier rapport, le premier rapport étant une proportion du nombre de pixels situés dans une plage du premier niveau de luminosité par rapport au nombre total de pixels de l'image ;
déterminer un second rapport, le second rapport étant une proportion du nombre de pixels situés dans une plage du second niveau de luminosité par rapport au nombre total de pixels de l'image ;
lorsque le premier rapport est supérieur à une première valeur et que le deuxième rapport est supérieur à une deuxième valeur, déterminer si un nombre de pixels consécutifs dans les pixels dans la plage du premier niveau de luminosité est supérieur à une troisième valeur, dans laquelle les pixels consécutifs sont les pixels qui ont des positions consécutives les positions consécutives font référence à deux pixels adjacents l'un à l'autre, et dans laquelle la première valeur est supérieure à zéro ; et
lorsque le nombre déterminé de pixels consécutifs dans les pixels situés dans la plage du premier niveau de luminosité est supérieur à une troisième valeur, obtenir le premier résultat de l'analyse ;
lorsque le premier rapport n'est pas supérieur à la première valeur, ou que le deuxième rapport n'est pas supérieur à la deuxième valeur, ou que le nombre déterminé de pixels consécutifs dans les pixels situés dans la plage du premier niveau de luminosité n'est pas supérieur à une troisième valeur, obtenir le deuxième résultat de l'analyse ;
dans lequel les valeurs de luminosité dans la plage du premier niveau de luminosité sont plus élevées que les valeurs de luminosité dans la plage du second niveau de luminosité.

10. Support de stockage non transitoire lisible par ordinateur comprenant des instructions amenant un ou plusieurs processeurs à effectuer les opérations suivantes :
acquérir une image autour du véhicule à partir d'une caméra embarquée pendant la conduite ;
analyser la distribution de la luminosité de l'image et obtenir un résultat d'analyse ; et
alerte conformément à une première procédure d'alerte lorsque le résultat de l'analyse est un premier résultat d'analyse, dans lequel le premier résultat d'analyse indique la présence d'une lumière de véhicule dans l'image ;
lorsque le résultat de l'analyse est un deuxième résultat, aucune alerte véhicule n'est requise, le deuxième résultat de l'analyse indique que les informations sur les pixels de l'image sont insuffisantes pour caractériser la présence de la lumière du véhicule dans l'image ;
dans lequel l'analyse de la distribution de la luminosité de l'image et l'obtention d'un résultat d'analyse comprennent :
déterminer un premier rapport, le premier rapport étant une proportion du nombre de pixels situés dans une plage du premier niveau de luminosité par rapport au nombre total de pixels de l'image ;
déterminer un second rapport, le second rapport étant une proportion du nombre de pixels situés dans une plage du second niveau de luminosité par rapport au nombre total de pixels de l'image ;
lorsque le premier rapport est supérieur à une première valeur et que le deuxième rapport est supérieur à une deuxième valeur, déterminer si un nombre de pixels consécutifs dans les pixels dans la plage du premier niveau de luminosité est supérieur à une troisième valeur, dans laquelle les pixels consécutifs sont les pixels qui ont des positions consécutives les positions consécutives font référence à deux pixels adjacents l'un à l'autre, et dans laquelle la première valeur est supérieure à zéro ; et
lorsque le nombre déterminé de pixels consécutifs dans les pixels situés dans la plage du premier niveau de luminosité est supérieur à une troisième valeur, obtenir le premier résultat de l'analyse ;
lorsque le premier rapport n'est pas supérieur à la première valeur, ou que le deuxième rapport n'est pas supérieur à la deuxième valeur, ou que le nombre déterminé de pixels consécutifs dans les pixels situés dans la plage du premier niveau de luminosité n'est pas supérieur à une troisième valeur, obtenir le deuxième résultat de l'analyse ;
dans lequel les valeurs de luminosité dans la plage du premier niveau de luminosité sont plus élevées que les valeurs de luminosité dans la plage du second niveau de luminosité.

11. Le support de stockage non transitoire lisible par ordinateur de la revendication 10 dans lequel la première procédure d'alerte comprend :
diffuser une sirène ; ou
diffuser une alerte vocale, l'alerte vocale indiquant la présence du feu du véhicule ; ou
marquer une zone de la lumière du véhicule sur l'image ; ou
faire apparaître une fenêtre d'alerte sur l'image pour signaler la présence du feu du véhicule.
